# FASCICULE DE BREVET EUROPEEN

(11) **EP 0 969 343 B1**
(45) Date de publication et mention de la délivrance du brevet: **13.03.2002**
(21) Numéro de dépôt: 99202144.4
(22) Date de dépôt: 01.07.1999
(51) Int. Cl.: G05D 16/06, F16K 7/17, F23N 5/00

(54) **Régulateur de pression de gaz**
Gasdruckregler
Gas pressure regulator

(30) Priorité: 04.07.1998 DE 19830043
(43) Date de publication de la demande: 05.01.2000
(73) Titulaire: Schlumberger Rombach GmbH, 76185 Karlsruhe (DE)
(72) Inventeur: Schuhbaum, Heinz, 76889 Barbelroth (DE)
(74) Mandataire: Dupont, Henri

(56) Documents cités:
- EP-A- 0 892 329
- DE-A- 3 117 761
- US-A- 4 424 830

## Description

L'invention concerne un régulateur de pression de gaz selon le préambule de la revendication 1.

On connaît, par le prospectus " Gasdruckregelregäte ZR 20 " de la firme J.B. Rombach GmbH Karlsruhe, 1994, un régulateur de pression de gaz qui présente un boîtier dans lequel est prévu un dispositif de soupape à diaphragme qui comprend au total quatre diaphragmes renforcés en tôle ainsi que d'autres pièces détachées, et dans lequel il est prévu en outre un dispositif à ressort pour leur précontrainte, qui est monté séparément dans une douille encastrée dans le boîtier, et soutenu par un couvercle. Le régulateur de pression de gaz possède une chambre de compensation qui est limitée par un diaphragme de travail et un diaphragme de compensation et qui est soumis à la pression de gaz régnant dans la conduite d'amenée par l'intermédiaire d'une conduite de liaison séparée. Non seulement, ce type d'agencement du dispositif de soupape à diaphragme et de chargement de la chambre de compensation comprend beaucoup de pièces mais, il exige également un montage coûteux.

On connaît aussi, par le document GB 2 078 341 A, un régulateur de pression de gaz qui comprend plusieurs diaphragmes de soupape encastrés dans le boîtier, qui sont assemblés à des sections correspondantes d'un poussoir de soupape par des assemblages à vis et qui séparent ainsi le boîtier en plusieurs chambres. Ici aussi, il est nécessaire de prévoir un grand nombre de pièces, lesquelles exigent un montage coûteux.

Le but de l'invention est de construire un régulateur de pression de gaz selon le préambule de la revendication 1, de réduire le nombre des pièces du dispositif de soupape, de manière à obtenir un montage simplifié.

Ce problème est résolu par la partie caractérisante de la revendication 1.

Ici, au moins une partie du dispositif de soupape à diaphragme est moulée par injection en une matière possédant l'élasticité du caoutchouc, le diaphragme servant aussi bien de diaphragme de travail que de diaphragme de compensation et assurant éventuellement encore d'autres fonctions. Il en résulte non seulement un montage très simple mais aussi une très faible hauteur de construction pour un régulateur de pression de gaz parcouru par un courant axial, qui peut être réalisé sous la forme d'un régulateur à un ou à deux conduits.

D'autres caractéristiques de l'invention sont définies dans la description qui va suivre et dans les revendications secondaires.

L'invention est exposée de façon plus détaillée ci-après à l'aide d'exemples de réalisation représentés sur les dessins annexés.

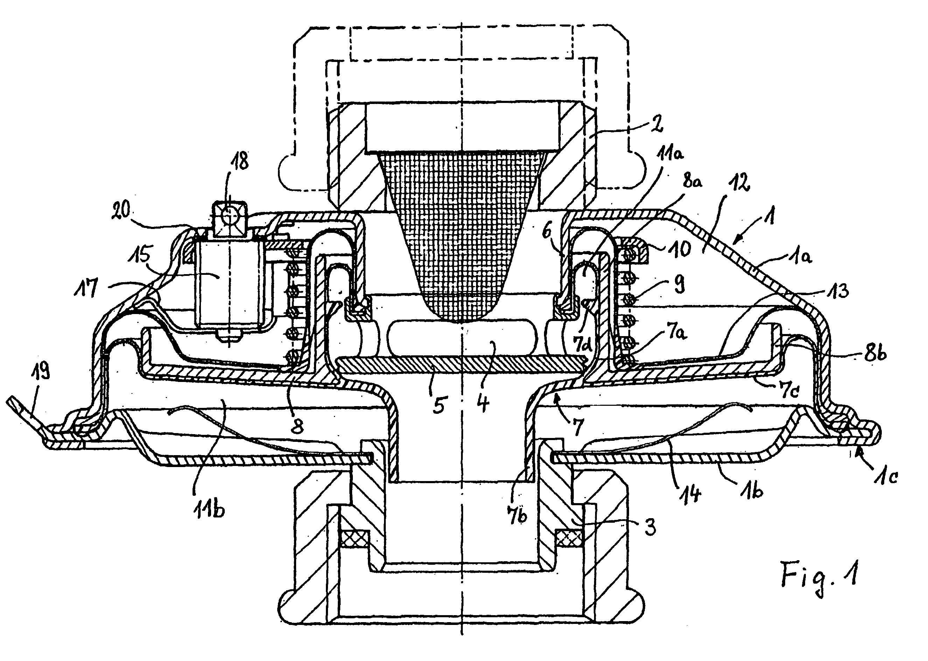

Les figures 1 à 6 montrent différentes formes de réalisation d'un régulateur de pression de gaz en coupe axiale.

Le régulateur de pression de gaz représenté sur la figure 1, constitué par un régulateur à deux tuyaux comprend un boîtier 1 sensiblement circulaire en vue de dessus, qui présente deux enveloppes en tôle concentriques 1a, 1b, assemblées l'une à l'autre le long de son bord périphérique, par exemple par un sertissage 1c et un tuyau d'admission 2 et un tuyau d'évacuation 3 servant pour le montage dans une conduite de gaz, qui sont disposés axialement l'un à la suite de l'autre, respectivement sur l'une et l'autre des enveloppes 1a, 1b, les tuyaux d'admission et d'évacuation 2, 3 pouvant être, par exemple, soudés ou fixés d'une autre façon au boîtier 1.

Un siège de soupape fixe 5, en forme de disque, pourvu d'ouvertures de passage latérales 4, appartenant à un dispositif de soupape à diaphragme contenu dans le boîtier 1, est fixé à l'enveloppe en tôle 1a côté admission au moyen d'une tubulure 6 formée sur l'enveloppe en tôle 1a, qui est disposée en position centrale axiale dans cet exemple de réalisation.
Le dispositif de soupape à diaphragme comprend en outre un diaphragme 7 d'un seul tenant qui présente une ouverture de passage en forme de buse, disposée en position centrale, qui s'étend autour du siège de soupape 5 et qui est limitée, sur le côté dirigé vers le tuyau d'admission 2, par une section d'anneau 7a qui entoure le siège de soupape 5 et qui s'étend sensiblement axialement, tandis que, sur le côté dirigé vers le tuyau d'évacuation 3, elle débouche, avec rétrécissement en entonnoir de Venturi dans un tuyau 7b qui est engagé dans le tuyau d'évacuation 3 tout en laissant un jeu. Le diaphragme 7 comprend en outre une section d'anneau 7c s'étendant sensiblement radialement, qui s'étend de la région de l'ouverture de passage jusqu'au sertissage 1c où elle est renflée et serrée de façon étanche.

Les deux sections d'anneaux 7a, 7c du diaphragme 7 sont de forme ondulée dans la région adjacente à leur bord extérieur recouvert, pour permettre un déplacement axial en dépit de l'encastrement de leurs périphéries extérieures. Entre les deux sections d'anneaux 7a, 7c du diaphragme 7, est disposé un disque de diaphragme annulaire 8, de préférence encastrée dans une contre-dépouille formée entre les sections d'anneaux 7a, 7c et qui comprend, sur chacune de ses périphéries, intérieure et extérieure, une section d'anneau d'appui 8a, 8b qui s'étend dans la direction axiale vers le côté d'admission, ces sections donnant un appui approprié aux sections d'anneaux 7a, 7c.

Un ressort 9, constitué par exemple par un ressort hélicoïdal, qui prend appui contre une coupelle de ressort 10 disposée dans le boîtier 1, précontraint le diaphragme 7 en direction du tuyau d'évacuation 3. En l'absence de pression de sortie, le dispositif de soupape à diaphragme se trouve en position de fermeture, dans laquelle un anneau de soupape 7d, formé sur le côté intérieur de la section d'anneau 7a, et qui s'étend obliquement par rapport au siège de soupape 5, vient en prise avec le côté du siège de soupape 5 qui est dirigé vers le tuyau d'admission 2. Ce siège est muni d'un petit perçage (non représenté) pour permettre un remplissage progressif de la conduite de gaz du côté de la sortie lorsque la pression du gaz est à nouveau appliquée du côté de l'entrée.

La section d'anneau 7a forme une chambre de compensation 11a avec l'anneau de soupape 7d, tandis que la section d'anneau 7c forme, avec l'enveloppe en tôle 1b, une chambre de pression différentielle 11b qui est soumise à la pression du gaz qui sort en passant par le jeu formé entre le tuyau 7b et le tuyau d'évacuation 3.

Lorsque du gaz est capté du côté de la sortie, le dispositif de soupape à diaphragme s'ouvre, de sorte que le gaz entrant par le tuyau d'admission 2 s'écoule à travers les ouvertures de passage 4, puis entre le siège de soupape 5 et le diaphragme de travail 7, pour pénétrer dans le tuyau 7b et, de là, s'évacuer en passant par le tuyau de sortie 3. Lorsque la pression du gaz est trop élevée, le diaphragme 7 se ferme par le fait qu'il entre en prise avec le siège de soupape 5 du côté de la sortie.

La pression d'air extérieure sert ici de pression de référence. Cette pression règne dans une chambre 12 formée entre l'enveloppe en tôle 1a et le diaphragme 7 et qui est en communication avec l'espace extérieur, c'est-à-dire avec l'atmosphère.

Le diaphragme 7 est ainsi un diaphragme à fonctions multiples qui est en même temps un diaphragme de travail et un diaphragme de compensation. Il forme l'ouverture de passage centrale du dispositif de soupape à diaphragme et ferme de façon étanche en cas de faible pression de gaz. Par ailleurs, il forme un convergent de Venturi ainsi que le joint étanche du boîtier. Entre le joint extérieur du boîtier et le joint de l'ouverture de passage, il n'y a pas d'ouvertures qui devraient être fermées de façon étanche. Etant donné que le disque de diaphragme 8 est avantageusement retenu dans une contre-dépouille du diaphragme 7, il ne se pose pas de problèmes d'étanchéité intérieure. La diaphragme 7 en une seule pièce permet une construction très compact avec des longueurs de construction de l'ordre de 50 mm.

Entre le diaphragme 7 ou le disque de diaphragme 8 et l'enveloppe en tôle 1a, il est en outre avantageusement prévu un diaphragme de sécurité 13 sur lequel le ressort 9 prend appui dans une région renforcée et dont les bord renflés sont serrés de façon étanche, avec les bords extérieurs des sections d'anneaux 7a, 7c du diaphragme 7.

Un ressort annulaire 14 comprenant plusieurs languettes radiales est avantageusement agencé du côté de la sortie, à peu près au niveau de l'enveloppe en tôle 1b, ce ressort assistant le mouvement du diaphragme 7 lorsque celui-ci se trouve dans la position fermée de l'anneau de soupape 7d, en direction du côté de l'entrée.

La coupelle de ressort 10 est avantageusement réglable dans la direction axiale pour le réglage de la précontrainte du ressort 9, au moyen d'une vis de réglage 15 disposée dans une position décentrée qui émerge en dehors du boîtier 1 et qu'on peut faire tourner par rapport à la coupelle de ressort 10 au moyen d'un perçage fileté correspondant, la vis de réglage 15 étant tenue dans le boîtier 1 par un étrier de retenue élastique 17. La position de la vis de réglage 15 peut être immobilisée au moyen d'un fil de plomb qui est passé à travers une ouverture 18 de la vis de réglage 15 et à travers un oeillet 19 prévu sur le boîtier. L'ouverture du boîtier qui reçoit la vis de réglage 15 est avantageusement utilisée comme communication de la chambre 12 avec l'atmosphère.

Ici, il peut être prévu entre la vis de réglage 15 et le boîtier 1 une rondelle intermédiaire 20 qui fond en cas d'incendie, de sorte que, par l'intermédiaire de la coupelle de ressort 10, le ressort hélicoïdal 9 pousse la vis de réglage 15 dans l'ouverture du boîtier pour fermer cette dernière. L'étrier 17 de retenue du ressort exerce ici une action d'assistance. Ceci forme d'une façon simple une sécurité contre le feu.

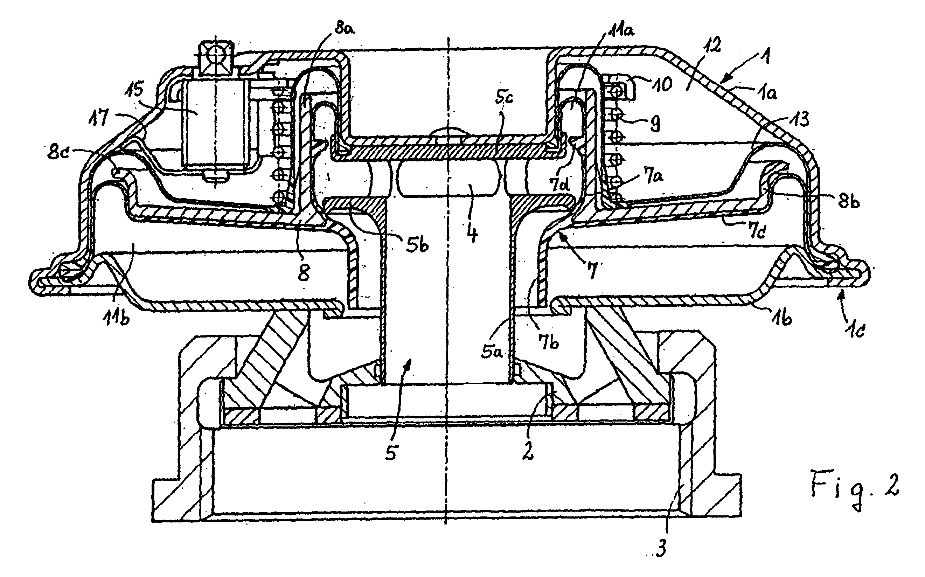

Quant à la forme de réalisation représentée sur la figure 2, il s'agit d'un régulateur à conduit unique dans lequel le côté de l'entrée et le côté de la sortie coïncident, le gaz arrivant étant admis au centre et étant évacué coaxialement. Ici, le siège de soupape 5 est fixé à l'enveloppe en tôle 1a et comprend un tuyau 5a côté admission auquel se raccordent une partie de siège annulaire 5b munie d'ouvertures de passages 4 et une section de disque 5c qui sert à fixer l'enveloppe en tôle 1a et à serrer les bords périphériques correspondants de la section d'anneau 7a du diaphragme 7 et le diaphragme de sécurité 13.

Le dispositif de soupape à diaphragme est disposé de la même façon que dans la forme de réalisation de la figure 1 et le mode de fonctionnement est donc correspondant. Toutefois, il manque ici le ressort annulaire 14 ; en remplacement, le disque de diaphragme 8 est muni, sur le côté du bord extérieur, d'une section 8c recourbée en direction de la section annulaire 7c et qui, en présence d'une déviation correspondante, se pose sur la section annulaire 7c et, de cette façon, engendre un couple de rappel correspondant en direction du côté d'entrée.

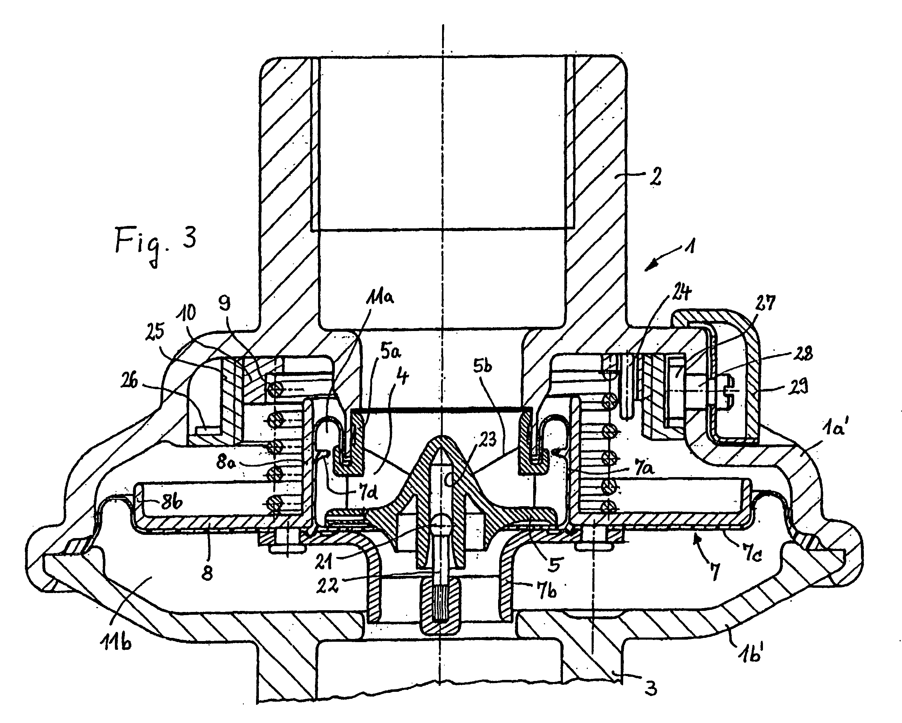

Dans la forme de réalisation représentée sur la figure 3, le tuyau 7b est constitué par une pièce séparée qui, à travers le diaphragme 7, est relié au disque de diaphragme 8, par exemple au moyen de rivets, et qui est guidé dans un perçage de guidage 23 du siège 5 de la soupape au moyen d'un doigt 22 muni d'une tête sphérique 21.

Le boîtier 1 est ici composé de deux éléments en fonte 1a', 1b' qui sont réalisés respectivement d'un seul tenant avec le tuyau d'admission et le tuyau d'évacuation, 2, 3.

Le siège de soupape 5 est serré sur l'élément en fonte 1a', avec serrage étanche du diaphragme 7 par rapport au bord périphérique correspondant 5a qui est relié au siège de soupape 5 par des ailettes radiales 5b.

La coupelle de ressort 10 est ici munie d'un filetage extérieur et est bloquée en rotation dans le boîtier 1 au moyen d'une goupille 24, dans une douille 25 munie d'un filetage intérieur et qui porte extérieurement une couronne dentée 26 grâce à laquelle elle est en prise avec un pignon 27 qu'on peut faire tourner au moyen d'un tourillon 28 dont la tête est disposée sur le côté extérieur du boîtier 1, et peut être actionnée pour le réglage de la coupelle de ressort 10, et est éventuellement protégée par un capôt 29. Un ressort de retenue 30 peut servir en supplément, en cas de feu, de ressort de fermeture, une rondelle intercalaire 31 fondant préalablement.

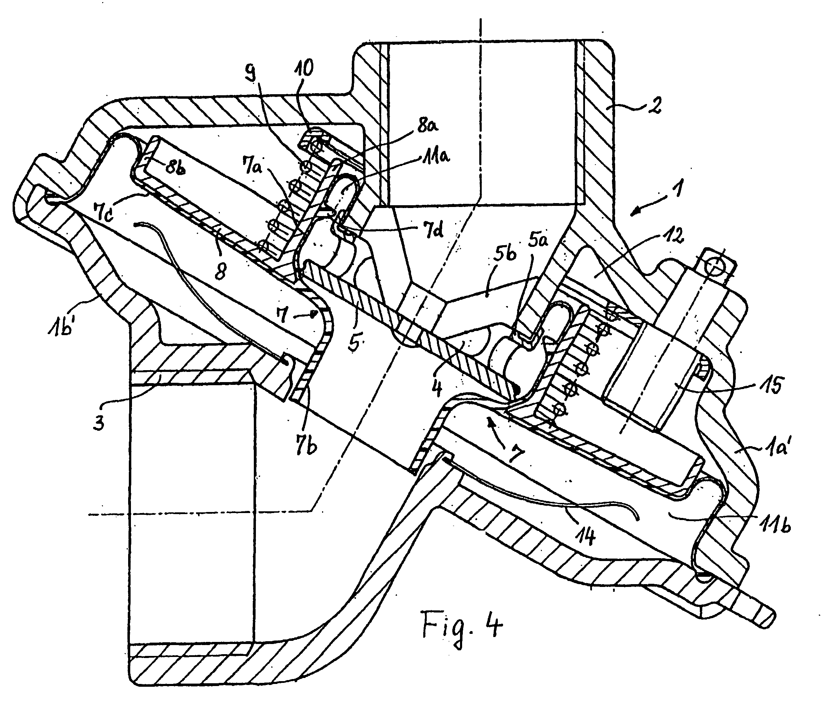

Dans la forme de réalisation représentée sur la figure 4, il s'agit d'un régulateur d'angle dans lequel le tuyau d'admission 2 est incliné d'un angle de 90° par rapport à le tuyau d'évacuation 3, les axes des tuyaux d'admission et d'évacuation 2, 3 étant disposés inclinés par rapport au dispositif de soupape à diaphragme. Le boîtier 1 est ici aussi composé de deux pièces en fonte 1a', 1b' qui sont réalisées d'un seul tenant avec le tuyau d'admission et le tuyau d'évacuation 2, 3 respectivement. Toutefois, par exemple, l'axe du tuyau d'admission ou du tuyau d'évacuation 2, 3 peut aussi s'étendre coaxialement à l'axe du dispositif de soupape à diaphragme, tandis que l'axe du tuyau d'évacuation et du tuyau d'admission 3, 2 sont perpendiculaire.

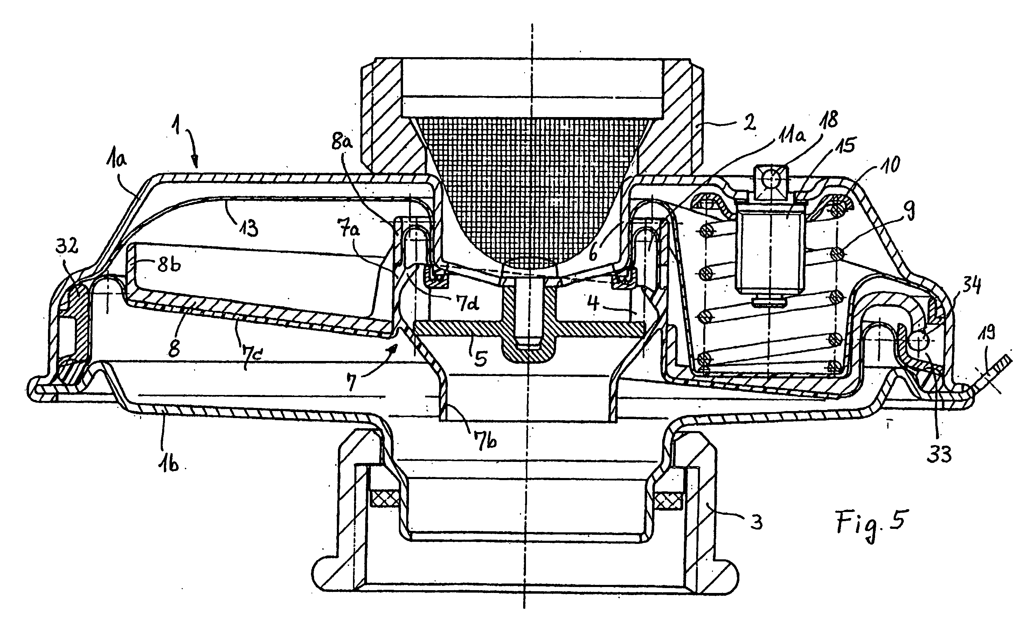

Dans la forme de réalisation représentée sur la figure 5, il est prévu un anneau 32 encastré dans le boîtier 1 et qui sert, d'une part à serrer le diaphragme 7 de façon étanche le long de sa périphérie extérieure, dans la région dans laquelle les deux moitiés de boîtier 1a, 1b sont réunies l'une à l'autre et qui, d'autre part est muni d'une zone de portée 33 pour une extrémité du disque 8 du diaphragme. De cette façon, on peut faire pivoter le disque 8 du diaphragme sous l'action d'un axe 34 logé dans la zone de portée 33 et ainsi le faire pivoter entre deux positions extrêmes. Selon ce mouvement de pivotage, l'anneau de soupape 7d est disposé obliquement par rapport à l'axe du dispositif de soupape à diaphragme et, par ailleurs l'axe de ce dernier est disposé de façon générale non centrée par rapport au boîtier 1.

Par ailleurs, dans cette forme de réalisation, dans le voisinage du disque 8 du diaphragme, la section 8a de l'anneau d'appui est reliée à ce disque par des nervures et le ressort 9 avec la coupelle de ressort 10 est prévu latéralement à la zone de déplacement du dispositif de soupape à diaphragme. Eventuellement, un couvercle amovible (non représenté) peut être prévu dans la partie du boîtier 1a au-dessus du ressort 9, pour permettre éventuellement d'échanger le ressort 9.

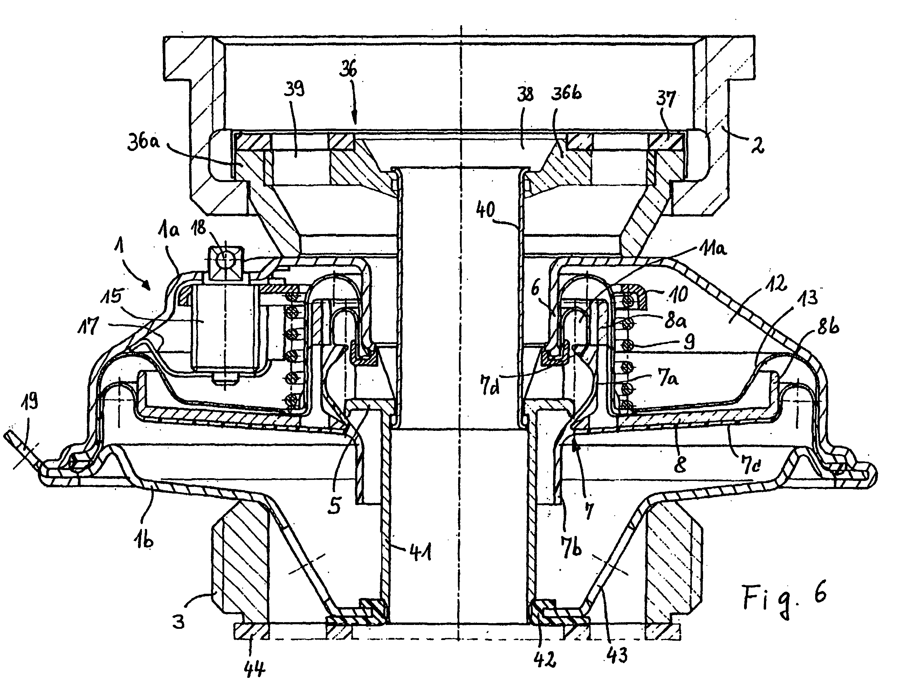

Dans la forme de réalisation d'un régulateur à un tube représentée sur la figure 6, le tuyau de raccordement muni d'un filetage intérieur est monté sur un distributeur 36 réuni au boîtier 1, qui est composé d'un anneau extérieur 36a et d'un anneau intérieur 36b, un joint 37 étant disposé sur ce dernier. L'anneau intérieur 36b présente une ouverture d'évacuation centrale 38 et présente plusieurs ouvertures d'admission 39 séparées les unes des autres par des nervures et disposées en couronne autour de l'ouverture d'évacuation 38.

Dans l'ouverture d'évacuation 38 est encastré de façon étanche un tronçon de tube 40 qui s'étend de l'anneau intérieur 36b vers le siège de soupape 5 et est encastré dans une ouverture de ce siège, également à joint étanche. Le siège de soupape 5 est muni d'un tuyau 41 qui prolonge le tronçon de tube 40 en direction du tuyau de raccordement 3, et qui avec le tronçon de tube 40, forme la conduite d'évacuation et, en même temps, renforce l'effet de Venturi du tuyau en forme d'entonnoir 7b du diaphragme 7.

L'enveloppe de boîtier 1b s'étend au-delà d'une section tronconique jusqu'à l'extrémité du tuyau 41 qui est la plus éloignée du siège de soupape 5 et elle est montée de façon étanche par rapport à ce dernier par l'intermédiaire d'un joint 42, formé par un joint emboîté en forme de U. Par ailleurs, l'enveloppe 1b du boîtier présente, dans la section tronconique, des ouvertures de passage 43 pour le gaz qui passe à travers le dispositif de soupape à diaphragme et longe la périphérie extérieure du tronçon de tube 40, et qui passe dans l'espace annulaire formé entre l'enveloppe 1b du boîtier et le tuyau 3 qui y est relié et, de là s'écoule, par exemple dans un compteur de gaz vissé au tuyau de sortie 3 avec interposition d'un joint 44, et d'où le gaz s'écoule de nouveau à travers le tuyau 41 et le tronçon de tube 40. Eventuellement, les joints 42 et 44 peuvent aussi être réalisés ensemble d'un seul tenant. Le tronçon de tube 40 peut aussi être formé d'un seul tenant avec l'anneau intérieur 36b.

Comme ceci est représenté dans cette forme de réalisation, la section 8a de l'anneau de soutien du disque de diaphragme 8 peut présenter des fentes et nervures axiales, auquel cas il peut aussi être prévu un soutien axial de la section d'anneau 7a par des nervures appropriées.

Lorsque le régulateur est prévu pour de hautes pressions d'admission, il est avantageux de monter le siège de soupape 5 légèrement en oblique, par exemple avec un angle d'inclinaison de quelques degrés, par rapport à la direction axiale, de sorte que le dispositif de soupape à diaphragme ne s'ouvre pas de la même façon sur toute la périphérie.

Le boîtier 1 peut être par exemple rond ou encore ovale en vue de dessus.

## Revendications

1. Régulateur de pression de gaz avec un boîtier (1) dans lequel est prévu, entre un tuyau d'admission (2) et un tuyau d'évacuation (3), un dispositif de soupape à diaphragme pour la fermeture d'une ouverture de passage semblable à une buse, le dispositif de soupape à diaphragme comprenant un siège de soupape (5) et un diaphragme de travail (7c) travaillant ici ensemble avec ledit siège, ledit diaphragme étant précontraint élastiquement et soumis d'un côté à une pression de référence et du côté de la chambre d'évacuation à un milieu de type gazeux, ainsi qu'un diaphragme de compensation (7a), limitant une chambre de compensation (11a), **caractérisé en ce que** le diaphragme de compensation (7a), en tant que section d'anneau s'étendant pour l'essentiel dans la direction du courant, forme avec le diaphragme de travail (7c) présentant une ouverture de passage, en tant que section d'anneau s'étendant pour l'essentiel perpendiculairement par rapport à la direction du courant, un diaphragme (7) d'un seul tenant.

2. Régulateur de pression de gaz selon la revendication 1, **caractérisé en ce que** le diaphragme (7) du côté de l'évacuation présente un tuyau (7b) semblable à un entonnoir qui produit, selon le principe de Venturi, la pression du côté de l'évacuation sous le diaphragme de travail.

3. Régulateur de pression de gaz selon la revendication 2, **caractérisé en ce que** le tuyau (7b) est formé d'un seul tenant avec le diaphragme (7).

4. Régulateur de pression de gaz selon la revendication 2, **caractérisé en ce que** le tuyau (7b) est formé de façon séparée du diaphragme (7) et est conduit à l'opposé du siège de soupape (5).

5. Régulateur de pression de gaz selon l'une des revendications 1 à 4, **caractérisé en ce que** le diaphragme (7) est renforcé par un disque de diaphragme (8) qui est en particulier, posé de façon libre.

6. Régulateur de pression de gaz selon la revendication 5, **caractérisé en ce que** le disque de diaphragme (8) est mis en oeuvre dans une contre-dépouille entre les sections d'anneau (7a,7c) du diaphragme 7.

7. Régulateur de pression de gaz selon l'une des revendications 1 à 6, **caractérisé en ce que** la périphérie du diaphragme (7) présente des bords formés en tant qu'anneaux d'étanchéité.

8. Régulateur de pression de gaz selon l'une des revendications 1 à 7, **caractérisé en ce que** le diaphragme (7) présente au niveau de la face intérieure de la section d'anneau (7a), un anneau de soupape (7d) formé d'un seul tenant avec ladite section d'anneau (7a), ledit anneau de soupape (7d) entrant en prise avec le siège de soupape (5) lors d'une pression de gaz insuffisante.

9. Régulateur de pression de gaz selon l'une des revendications 1 à 8, **caractérisé en ce que** le siège de soupape (5) présente une section d'anneau périphérique pourvue d'ouvertures de passage du courant de gaz (4).

10. Régulateur de pression de gaz selon l'une des revendications 1 à 9, **caractérisé en ce qu'**un diaphragme de sécurité (13) est disposé entre le boîtier (1) et le côté du diaphragme (7) soumis à la pression de référence.

11. Régulateur de pression de gaz selon l'une des revendications 1 à 10, **caractérisé en ce que** le diaphragme (7) est soumis à un ressort (9) réglable maintenu par le boîtier (1).

12. Régulateur de pression de gaz selon la revendication 11, **caractérisé en ce que** le ressort (9) est maintenu dans le boîtier (1) grâce à une coupelle de ressort (10) qui est disposée de façon à pouvoir être réglée par rapport au diaphragme (7).

13. Régulateur de pression de gaz selon la revendication 12, **caractérisé en ce que** la coupelle de ressort (10) est réglable par l'intermédiaire d'une vis de réglage (15) actionnable au travers d'une ouverture dans le boîtier.

14. Régulateur de pression de gaz selon la revendication 13, **caractérisé en ce qu'**une rondelle intermédiaire (20) pouvant fondre pour des températures élevées est disposé entre la vis de réglage (15) et le boîtier (1), de telle sorte qu'en cas de fonte du disque intermédiaire (20), l'ouverture dans le boîtier soit fermée par l'intermédiaire de la vis de réglage (15).

15. Régulateur de pression de gaz selon l'une des revendications 1 à 14, **caractérisé en ce que** du côté de l'évacuation dans le boîtier, un ressort annulaire (14) percutant le diaphragme (7) dans sa position extrême du côté de l'évacuation est prévu.

16. Régulateur de pression de gaz selon l'une des revendications 1 à 14, **caractérisée ce que** le disque de diaphragme (8) présente au niveau du bord extérieur une section (8c) recourbée en direction de la section de l'anneau (7c), laquelle lors d'une insuffisance de pression entre en contact avec la section de l'anneau (7c), ledit contact menant à une précontrainte dans la direction inverse.

17. Régulateur de pression de gaz selon l'une des revendications 1 à 16, **caractérisé en ce que** le boîtier (1) est formé de deux enveloppes de boîtier (1a, 1b), entre lesquelles le diaphragme (7) est encastré de façon étanche au niveau de la périphérie extérieure du boîtier (1).

18. Régulateur de pression de gaz avec un boîtier (1) dans lequel est prévu, entre un tuyau d'admission et un tuyau d'évacuation, un dispositif de soupape à diaphragme pour la fermeture d'une ouverture de passage semblable à une buse, le dispositif de soupape à diaphragme comprenant un siège de soupape (5) et un diaphragme de travail (7c) travaillant ici ensemble avec ledit siège, ledit diaphragme étant précontraint élastiquement et soumis d'un côté à une pression de référence et du côté de la chambre d'évacuation à un milieu de type gazeux, ainsi qu'un diaphragme de compensation (7a) limitant une chambre de compensation (11a), en particulier selon l'une des revendications 1 à 17, **caractérisé en ce qu'**en tant que régulateur axial à un seul conduit, il présente un tuyau d'évacuation s'étendant au travers du siège de soupape (5) ainsi qu'une enveloppe de boîtier (1b) s'étendant vers l'extrémité du tuyau d'évacuation du côté de l'admission et étanchéifiée vis à vis dudit tuyau, ladite enveloppe portant un tuyau d'évacuation (3) et étant munie d'ouvertures de passage (43), qui débouchent dans un espace annulaire entre l'enveloppe du boîtier (1b) et le tuyau d'évacuation (3).

19. Régulateur de pression de gaz selon la revendication 18, **caractérisé en ce que** l'enveloppe du boîtier (1b) comprend une section présentant les ouvertures de passage (43), en particulier pour l'essentiel en forme de cône tronqué, prolongeant l'enveloppe de boîtier (1b) vers l'extrémité libre d'un tuyau (41), ladite enveloppe du boîtier entourant le tuyau (41) qui limite le tuyau d'évacuation.

20. Régulateur de pression de gaz selon la revendication 19, **caractérisé en ce qu'**un joint (42) formé en tant que joint d'étanchéité lié est prévu entre le boîtier (1b) et le tuyau (41) qui limite le tuyau d'évacuation.

## Patentansprüche

1. Gasdruckregler mit einem Gehäuse (1), in dem zwischen einem Zuström- (2) und einem Abströmkanal (3) eine Membranventilanordnung zum Verschließen einer düsenartigen Durchtrittsöffnung vorgesehen ist, wobei die Membranventilanordnung einen Ventilsitz (5) und eine hiermit zusammenarbeitende, federvorgespannte, von einer Seite mit einem Referenzdruck und abströmkammerseitig von einem gasgörmigen Medium beaufschlagte Arbeitsmembran (7c) sowie eine eine Ausgleichskammer (11a begrenzende Ausgleichsmembran (7a) umfaßt, **dadurch gekennzeichnet, daß** die Ausgleichsmembran (7a) als ein sich im wesentlichen in Durchströmrichtung erstreckender Ringabschnitt mit der eine Durchtrittsöffnung aufweisenden Arbeitsmembran (7c) als ein sich im wesentlichen quer zur Durchströmrichtung erstreckender Ringabschnitt eine einstückige Membran (7) bildet.

2. Gasdruckregler nach Anspruch 1, **dadurch gekennzeichnet, daß** die Membran (7) abströmseitig einen trichterartigen Stutzen (7b) aufweist, der nach dem Venturiprinzip den abströmseitigen Druck unter der Arbeitsmembran erzeugt.

3. Gasdruckregler nach Anspruch 2, **dadurch gekennzeichnet, daß** der Stutzen (7b) einstückig mit der Membran (7) ausgebildet ist.

4. Gasdruckregler nach Anspruch 2, **dadurch gekennzeichnet, daß** der Stutzen (7b) separat von der Membran (7) ausgebildet und gegenüber dem Ventilsitz (5) geführt ist.

5. Gasdruckregler nach einem der Ansprüche 1 bis 4, **dadurch gekennzeichnet, daß** die Membran (7) durch einen Membranteller (8) verstärkt ist, der insbesondere lose aufliegt.

6. Gasdruckregler nach Anspruch 5, **dadurch gekennzeichnet, daß** der Membranteller (8) in eine Hinterschneidung zwischen den Ringabschnitten (7a, 7c) der Membran (7) eingesetzt ist.

7. Gasdruckregler nach einem der Ansprüche 1 bis 6, **dadurch gekennzeichnet, daß** die Membran (7) umlaufende, als Dichtungsringe ausgebildete Ränder aufweist.

8. Gasdruckregler nach einem der Ansprüche 1 bis 7, **dadurch gekennzeichnet, daß** die Membran (7) an der Innenseite des sich in Durchströmrichtung erstreckenden Ringabschnitts (7a) einen einstückig damit ausgebildeten Ventilring (7d) zum Eingriff mit dem Ventilsitz (5) bei fehlendem Gasdruck aufweist.

9. Gasdruckregler nach einem der Ansprüche 1 bis 8, **dadurch gekennzeichnet, daß** der Ventilsitz (5) einen mit Durchströmöffnungen (4) versehenen Umfangsringabschnitt aufweist.

10. Gasdruckregler nach einem der Ansprüche 1 bis 9, **dadurch gekennzeichnet, daß** zwischen dem Gehäuse (1) und der mit dem Referenzdruck beaufschlagten Seite der Membran (7) eine Sicherheitsmembran (13) angeordnet ist.

11. Gasdruckregler nach einem der Ansprüche 1 bis 10, **dadurch gekennzeichnet, daß** die Membran (7) von einer im Gehäuse (1) abgestützten, einstellbaren Feder (9) beaufschlagt ist.

12. Gasdruckregler nach Anspruch 11, **dadurch gekennzeichnet, daß** die Feder (9) über einen Federteller (10) im Gehäuse (1) abgestützt ist, der in bezug auf die Membran (7) verstellbar angeordnet ist.

13. Gasdruckregler nach Anspruch 12, **dadurch gekennzeichnet, daß** der Federteller (10) über eine von außen durch eine Gehäuseöffnung betätigbare Stellschraube (15) verstellbar ist.

14. Gasdruckregler nach Anspruch 13, **dadurch gekennzeichnet, daß** zwischen der Stellschraube (15) und dem Gehäuse (1) eine bei hohen Temperaturen schmelzbare Zwischenscheibe (20) derart angeordnet ist, daß infolge des Schmelzens der Zwischenscheibe (20) die Gehäuseöffnung durch die Stellschraube (15) verschlossen wird.

15. Gasdruckregler nach einem der Ansprüche 1 bis 14, **dadurch gekennzeichnet, daß** abströmseitig im Gehäuse (1) eine die Membran (7) in ihrer abströmseitigen Endstellung beaufschlagende Ringfeder (14) vorgesehen ist.

16. Gasdruckregler nach einem der Ansprüche 5 bis 14, **dadurch gekennzeichnet, daß** der Membranteller (8) am Außenrand einen umgebogenen Abschnitt (8c) aufweist, der bei Druckmangel mit der Arbeitsmembran (7c) in diese in Richtung auf den Ventilsitz (5) vorspannenden Eingriff gelangt.

17. Gasdruckregler nach einem der Ansprüche 1 bis 16, **dadurch gekennzeichnet, daß** das Gehäuse (1) aus zwei Gehäuseschalen (1a, 1b) gebildet ist, zwischen denen die Membran (7) am Außenumfang das Gehäuse (1) abdichtend eingespannt ist.

18. Gasdruckregler nach einem der Ansprüche 1 bis 17, **dadurch gekennzeichnet, daß** er als Einrohr-Axialregler ausgebildet einen sich durch den Ventilsitz (5) hindurch erstreckenden Abströmkanal (40, 41) sowie eine sich zum einlaßseitigen Ende des Abströmkanals (40, 41) erstreckende und gegenüber diesem abgedichtete Gehäuseschale (1b) aufweist, die einen Auslaßstutzen (3) trägt und mit Durchtrittsöffnungen (43) versehen ist, die in einen Ringraum zwischen der Gehäuseschale (1b) und dem Auslaßstutzen (3) münden.

19. Gasdruckregler nach Anspruch 18, **dadurch gekennzeichnet, daß** die Gehäuseschale (1b) einen den Abströmkanal begrenzenden Rohrstutzen (41) umgibt, und daß die Gehäuseschale (1b) einen kegelstumpfförmigen, die Durchtrittsöffnungen (43) aufweisenden Abschnitt umfaßt.

20. Gasdruckregler nach Anspruch 19, **dadurch gekennzeichnet, daß** zwischen der Gehäuseschale (1b) und dem Rohrstutzen (41) eine als Einknüpfdichtung ausgebildete Dichtung (42) vorgesehen ist.

## Claims

1. A gas pressure regulator comprising a housing (1) in which there is provided, between an admission fitting (2) and an exhaust fitting (3), a diaphragm valve device to enable a nozzle-like through opening to be closed, the diaphragm valve device comprising a valve seat (5) and a working diaphragm (7c) co-operating with said seat, said diaphragm being resiliently biased and being subjected on one side to a reference pressure and on the exhaust chamber side to a gaseous type of medium, the valve device also comprising a compensation diaphragm (7a) defining a compensation chamber (11a), the regulator being **characterized in that** the compensation diaphragm (7a) in the form of a ring section extending essentially in the flow direction, and the working diaphragm (7c) in the form of a ring section extending essentially perpendicularly to the flow direction and presenting a through opening, together constitute a one-piece diaphragm (7).

2. A gas pressure regulator according to claim 1, **characterized in that** the diaphragm (7) on the exhaust side presents a funnel-like structure (7b) producing the exhaust side pressure beneath the working diaphragm in application of the Venturi principle.

3. A gas pressure regulator according to claim 2, **characterized in that** the funnel (7b) is integrally formed with the diaphragm (7).

4. A gas pressure regulator according to claim 2, **characterized in that** the funnel (7b) is formed separately from the diaphragm (7) and is taken to the opposite side of the valve seat (5).

5. A gas pressure regulator according to any one of claims 1 to 4, **characterized in that** the diaphragm (7) is reinforced by a diaphragm disk (8) which, in particular, is placed to move freely.

6. A gas pressure regulator according to claim 5, **characterized in that** the diaphragm disk (8) is engaged in a re-entrant portion between the ring sections (7a, 7c) of the diaphragm (7).

7. A gas pressure regulator according to any one of claims 1 to 6, **characterized in that** the periphery of the diaphragm (7) presents edges that are formed to constitute sealing rings.

8. A gas pressure regulator according to any one of claims 1 to 7, **characterized in that** the diaphragm (7) presents, on the inside face of the ring section (7a), a valve ring (7d) integrally formed with said ring section (7a), said valve ring (7d) engaging the valve seat (5) when gas pressure is insufficient.

9. A gas pressure regulator according to any one of claims 1 to 8, **characterized in that** the valve seat (5) presents a peripheral ring section provided with through openings for the flow of gas (4).

10. A gas pressure regulator according to any one of claims 1 to 9, **characterized in that** a safety diaphragm (13) is disposed between the housing (1) and the side of the diaphragm (7) which is subjected to the reference pressure.

11. A gas pressure regulator according to any one of claims 1 to 10, **characterized in that** the diaphragm (7) is subjected to an adjustable spring (9) held by the housing (1).

12. A gas pressure regulator according to claim 11, **characterized in that** the spring (9) is held in the housing (1) by means of a spring cup (10) which is placed so as to be capable of being adjusted relative to the diaphragm (7).

13. A gas pressure regulator according to claim 12, **characterized in that** the spring cup (10) is adjustable by means of an adjustment screw (15) which can be actuated through an opening in the housing.

14. A gas pressure regulator according to claim 13, **characterized in that** an intermediate washer (20) capable of melting at high temperature is placed between the adjustment screw (15) and the housing (1) so that in the event of the intermediate disk (20) melting, the opening in the housing is closed by means of the adjustment screw (15).

15. A gas pressure regulator according to any one of claims 1 to 14, **characterized in that** an annular spring (14) is provided inside the housing on the exhaust side to strike the diaphragm (7) when in its extreme position on the exhaust side.

16. A gas pressure regulator according to any one of claims 1 to 14, **characterized in that** the outer edge of the diaphragm disk (8) presents a section (8c) curved towards the ring section (7c), such that when pressure is insufficient it comes into contact with the ring section (7c), said contact leading to pre-stress in the reverse direction.

17. A gas pressure regulator according to any one of claims 1 to 16, **characterized in that** the housing (1) is made up of two housing shells (1a, 1b) with the diaphragm (7) being received in leaktight manner between them at the outer periphery of the housing (1).

18. A gas pressure regulator having a housing (1) in which there is provided, between an admission fitting and an exhaust fitting, a diaphragm valve device for closing a nozzle-like through opening, the diaphragm valve device comprising a valve seat (5) and a working diaphragm (7c) co-operating with said seat, said diaphragm being resiliently biased and subjected on one side to a reference pressure and on an evacuation chamber side to a gaseous type medium, the valve device also comprising a compensation diaphragm (7a) defining a compensation chamber (11a), in particular according to any one of claims 1 to 7, the regulator being **characterized in that** as a single-duct axial regulator it presents an exhaust fitting extending through the valve seat (5) and a housing shell (1b) extending towards the end of the exhaust fitting adjacent to the admission and sealed relative to said fitting, said shell carrying an exhaust fitting (3) and being provided with through openings (43) which open out into an annular space between the housing shell (1b) and the exhaust fitting (3).

19. A gas pressure regulator according to claim 18, **characterized in that** the housing shell (1b) comprises a section presenting through openings (43), in particular essentially in the form of a truncated cone extending the housing shell (1b) towards the free end of a fitting (41), said housing shell surrounding the fitting (31) which defines the exhaust fitting.

20. A gas pressure regulator according to claim 19, **characterized in that** a gasket (42) formed as a bonded sealing ring is provided between the housing (1b) and the fitting (41) which defines the exhaust fitting.
